# EUROPEAN PATENT APPLICATION

(11) **EP 0 948 213 A2**
(43) Date of publication of application: **06.10.1999**
(21) Application number: 99250102.3
(22) Date of filing: 31.03.1999
(51) Int. Cl.: H04N 7/36, H04N 7/50

(54) **Moving pictures decompression device and method thereof**

(30) Priority: 31.03.1998 JP 8656398
(71) Applicant: NEC CORPORATION, Tokyo (JP)
(72) Inventor: Ikekawa, Masao, Minato-ku, Tokyo (JP)
(74) Representative: Patentanwälte Wenzel & Kalkoff

(57) **Abstract**

A moving pictures decompression device and method thereof enable deterioration to be prevented regarding processing speed of a decode software when a moving pictures decompression is implemented. The moving pictures decompression device is provided with a CPU 1 in which a cache memory device is integrated, an internal memory device 2, a display device 3, an external storage device 4, and a decode software operating in accordance with the CPU 1. A first measure which combines to be implemented a variable length code decoding, an inverse quantization, and an inverse DCT (Discrete Cosine Transformation) regarding a plurality of macro blocks, and a second measure which combines to be implemented a motion compensation processing regarding a plurality of macro blocks, are provided. Thus it is possible to prevent lowering of the processing speed of a decode software when the moving pictures decompression is implemented.

## Description

### BACKGROUND OF THE INVENTION

The present invention relates to a moving pictures decompression device and a method thereof which relate to technology for decompressing a compressed moving pictures data. More particularly this invention relates to a moving pictures decompression device and a method thereof which implement memory access efficiently when processing is performed by software.

### Description of the Prior Art

An International Standard System called MPEG (Moving Picture coding Experts Group) is prescribed by way of compressing and decompressing system in order to store or to communicate high quality moving pictures data. Formerly, there is used the hardware designed especially, because a great deal of calculation quantity is required in order to decompress moving pictures data which is compressed in accordance with the standard of MPEG in real-time processing. It is possible to realize gradually the decompression of the compressed data only by software of regular micro processor without using special hardware due to the high performance tendency of the latest micro processor.

Compression algorithms and decompression algorithms of MPEG, are described, in detail, in Communications of the ACM Vol. 34, No. 4, April, 1991. The decompression algorithm of MPEG roughly consists of a decoding processing of variable length code, an inverse quantization processing, an inverse discrete cosine transformation processing, and a motion compensation processing.

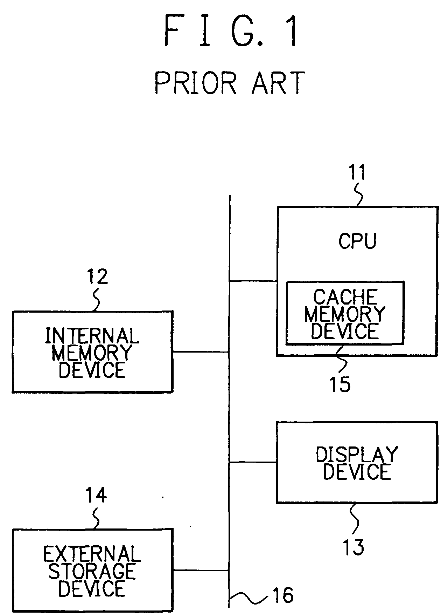

A device shown in Fig. 1 is well known by way of a conventional moving pictures decompression device. The conventional moving pictures decompression device is provided with a CPU 11, an internal memory device 12, a display device 13, an external storage device 14, and a cache memory device 15. A bit stream which represents moving pictures compressed by MPEG is stored in the external storage device 14. The bit stream is read out from the external storage device 14 to be stored in the internal memory 12 temporarily. The bit stream stored in the internal memory device 12 is decompressed by the function of the decode software operated in the CPU 11. An image data is stored in the internal memory device 12 as a result thereof. The image data stored in the internal memory device 12 is transferred to the display device 203 while being converted into format for displaying by the software on the CPU 11.

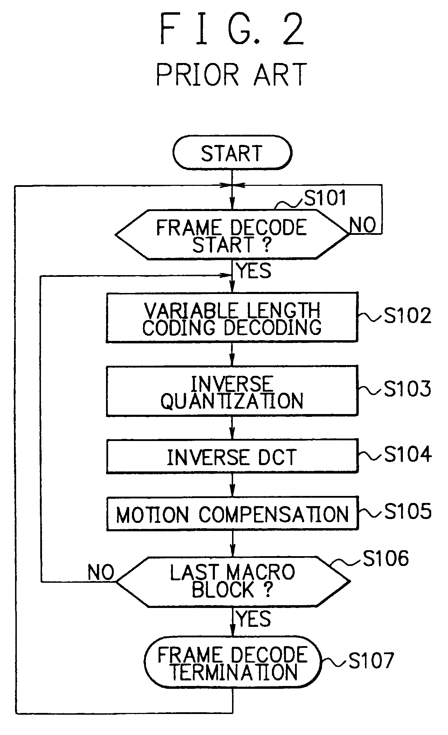

Operation of the decode software is described referring to the flowchart shown in Fig. 2. In the decompression processing of 1 (one) frame, the frame decoding is commenced (STEP S101). The variable length code decoding (STEP S102), the inverse quantization (STEP S103), the inverse discrete cosine transformation (STEP S104), and the motion compensation (STEP S105) are repeated in every macro block. Subsequently, when the last macro block of 1 (one) frame is processed (STEP S106), the decompression processing of 1 (one) frame ends (STEP S107).

As shown in Fig. 1, the cache memory device 15 is integrated into the CPU 1 of the conventional moving pictures decompression device. The cache memory device 15 is a memory device with small capacity in comparison with the internal memory device 12 and is capable of performing high speed access. The CPU 1 stores the content of the internal memory 12 in the cache memory 15, which is accessed previously by the CPU 1. The CPU 1 expels the content which is not accessed for a long time after being accessed once from the cache memory 15. Thus the content is written back into the internal memory device 12. Namely, the CPU 1 can access the content accessed once within machine cycle of the CPU 11 if the content has been accessed once previously because the content remains in the cache memory device 15. This is called a cache hit. When the CPU 11 accesses the content which has not yet been accessed once or the content of the internal memory device 12, which is not stored in the cache memory device 15, because has not been accessed for a long time after accessing once, it takes a lot of time, namely from several times to scores of times of machine cycles of the CPU 1. This is called a cache miss. Furthermore, generally, the cache memory device 15 is controlled in every unit of degree of scores of bytes, which is called a cache line as the unit. When an accessing of a certain memory address causes the cache miss, the cache line including the address is loaded into the cache memory.

In the general micro processor, it is important that the cache memory device 15 can be used effectively in order to improve processing of the speed of software, because the operation of the whole processor is stopped during the time period when the processor is waiting for the access of the data caused by the cache miss. At present the capacity of the cache memory device 15 integrated in the micro processor is from several kilo bytes to several hundreds kilo bytes.

Operation of the cache memory 15 is considered, when a decompression in accordance with the MPEG is implemented by the conventional moving pictures decompression device. In each processing shown in the flowchart of Fig. 2, the variable length code decoding processing of STEP S102, and the motion compensation processing of STEP S105 need to access much memory space. In another type of processing, only the DCT coefficient buffer is mainly accessed. The DCT coefficient buffer is sufficiently small in comparison with the capacity of the cache memory device 15. The DCT coefficient buffer is always accessed through the whole decompression processing of the macro block. Therefore it can be considered that the DCT coefficient buffer is always maintained by the cache memory device 15. Consequently, the cache miss does not occur in accessing toward that region. In the motion compensation processing of STEP S105, the cache miss occurs, because the capacity of a reference frame is larger than the cache memory device 15. In the variable length code decoding of STEP S102, the cache miss occurs because capacity of reference table is larger than the cache memory device 15.

Thus, it occurs the cache miss in the variable length code decoding processing and the motion compensation processing of the moving pictures decompression device shown in the above conventional example. In particular, according to the capacity of the cache memory device 15 and the constitution of variable length code table, it may occur that the variable length code table data stored in the cache memory device 15 is expelled from the cache memory device 15 during the motion compensation processing. On the contrary, it can occur that the reference frame data stored in the cache memory device 15 is expelled from the cache memory device 15 during the variable length code decoding processing.

Consequently, in the conventional moving pictures decompression device, there is the problem that the speed of the decode software is lowered because the cache miss is easy to occur.

### SUMMARY OF THE INVENTION

In view of the foregoing, it is an object of the present invention to overcome the above mentioned problems and to provide a moving pictures decompression device and a method thereof which suppresses cache miss in variable length code decoding processing and motion compensation processing, so that deterioration of processing speed of a decode software can be prevented.

According to a first aspect of the present invention, in order to achieve the above-mentioned object, a moving pictures decompression device is provided in which a CPU, a memory device, a display device and a decode software are provided, which operates on the CPU, having means for combining to be implemented a variable length code decoding, an inverse quantization, and an inverse DCT (Discrete Cosine Transformation) regarding a plurality of macro blocks.

According to a second aspect of the present invention, a moving pictures decompression device is provided in which a CPU, a memory device, a display device and a decode software are provided, which operates on the CPU, having means for combining to be implemented a motion compensation processing regarding a plurality of macro blocks.

According to a third aspect of the present invention, a moving pictures decompression device is provided in which a CPU, a memory device, a display device and a decode software are provided, which operates on the CPU, having means for combining to be implemented a variable length code decoding, an inverse quantization, and an inverse DCT (Discrete Cosine Transformation) regarding a plurality of macro blocks, and means for combining to be implemented a motion compensation processing regarding a plurality of macro blocks.

According to a fourth aspect of the present invention, a moving pictures decompression method is provided in which a CPU, a memory device, a display device and a decode software are provided, which operates on the CPU, comprising the step of combining to be implemented a variable length code decoding, an inverse quantization, and an inverse DCT (Discrete Cosine Transformation) regarding a plurality of macro blocks.

According to a fifth aspect of the present invention, a moving pictures decompression method is provided in which a CPU, a memory device, a display device and a decode software are provided, which operates on the CPU, comprising the step of combining to be implemented a motion compensation processing regarding a plurality of macro blocks.

According to a sixth aspect of the present invention, a moving pictures decompression method is provided in which a CPU, a memory device, a display device and a decode software are provided, which operates on the CPU, comprising the steps of combining to be implemented a variable length code decoding, an inverse quantization, and an inverse DCT (Discrete Cosine Transformation) regarding a plurality of macro blocks, and combining to be implemented a motion compensation processing regarding a plurality of macro blocks.

The above and further objects and novel features of the invention will be more fully understood from the following detailed description when the same is read in connection with the accompanying drawings. It should be expressly understood, however, that the drawings are for purpose of illustration only and are not intended as a definition of the limits of the invention.

### BRIEF DESCRIPTION OF THE DRAWINGS

Fig. 1 is a block diagram showing a conventional moving pictures decompression device;
Fig. 2 is a flowchart explaining operation of the conventional moving pictures decompression device;
Fig. 3 is a block diagram showing a moving pictures decompression device according to one embodiment of the present invention; and
Fig. 4 is a flowchart showing operation example of the moving pictures decompression device according to one embodiment of the present invention.

### DETAILED DESCRIPTION OF THE PREFERRED EMBODIMENT

A preferred embodiment of the present invention will be described in detail in accordance with the accompanying drawings.

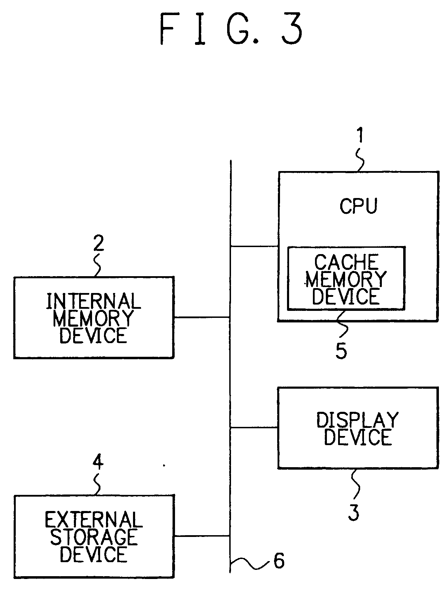

Fig. 3 is a block diagram showing a moving pictures decompression device according to one embodiment of the present invention. The moving pictures decompression device according to the one embodiment of the invention comprises a CPU 1, an internal memory 2, a display device 3, an external storage device 4, a cache memory device 5, and a decode software operated by the CPU 1. The CPU 1 is connected to the internal memory device 2, the display device 3, and the external storage device 4 through bus 6. The cache memory device 5 is integrated into the CPU 1. Further, the CPU 1 stores therein the decode software for operating the moving pictures decompression device of the present invention.

The bit stream compressed in accordance with MPEG is stored in the external storage device 4. The bit stream is read out from the external storage device 4 to be stored in the internal memory device 2 temporarily. The bit stream stored in the internal memory 2 is decompressed depending on the function of the decode software which operates on the CPU 1, thus causing image data to be stored in the internal memory device 2 as a result thereof.

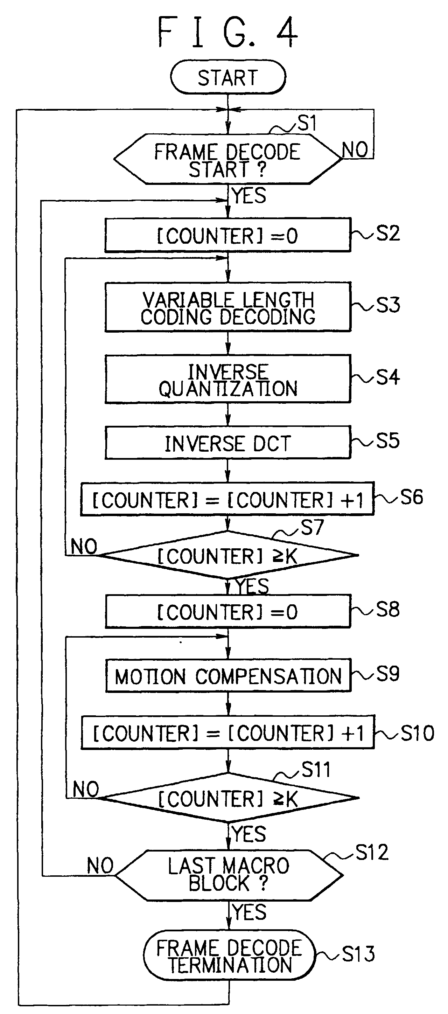

Operation of the moving pictures decompression device of the present invention will be described based on Fig. 4. Fig. 4 is a flowchart for explaining the operation of the moving pictures decompression device according to one embodiment of the invention. With K as a fixed number, K pieces DCT coefficient buffers from DCT coefficient buffer #1 to DCT coefficient buffer #K are prepared.

The moving pictures decompression device according to one embodiment judges whether or not frame decode starts (STEP S1), when the frame decode starts, setting as being [counter] = 0 (STEP S2). Next, a decompression processing of 1 (one) frame is implemented as follows: variable length code decoding in every 1 (one) macro block (STEP S3), inverse quantization (STEP S4), and inverse DCT (STEP S5) are implemented, when these operations of one time are terminated, setting as being [counter] = [counter] + 1 (STEP S6), next, it is judged whether or not [counter] ≧ K (STEP S7). In STEP S7, it is not the case as being [counter] ≧ K, returning to STEP S3. In the N-th times repetition DCT coefficient buffer #N is accessed. Thus such operations of the variable length code decoding is repeated (STEP S3) the inverse quantization (STEP S4), and the inverse DCT (STEP S5), for K times. Namely, the operations of the variable length code decoding (STEP S3), the inverse quantization (STEP S4), and the inverse DCT (STEP S5) to the macro block of K pieces are combined for implementation. With respect to the fixed number K, the optimum value of K is different in accordance with the size of the cache memory device 5.

The variable length code decoding for 1 (one) macro block (STEP S3) is to implement decoding of a Huffman code in such a way that the bit stream stored in the internal memory 2 is read out every several bits, and the variable length code table is referred to. The variable length code table is stored in the internal memory device 2 beforehand. Decoding result of the Huffman code is stored in a domain on the internal memory device 2 called DCT coefficient buffer.

The inverse quantization (STEP S4) is a processing for obtaining the product between a value stored in the DCT coefficient buffer and a quantization parameter. The result of the inverse quantization is rewritten into the same DCT coefficient buffer. The inverse DCT (STEP S5) is to execute two-dimensional inverse discrete cosine transformation to the value undergoing inverse quantization, stored in the DCT coefficient buffer. The result of the two-dimensional inverse discrete cosine transformation is rewritten into the same DCT coefficient buffer.

In STEP S7, at the time of [counter] ≧ K [counter] = 0 is set (STEP S8). Next, the motion compensation is executed (STEP S9), setting as [counter] = [counter] + 1 (STEP S10), before it is judged whether or not [counter] ≧ K, in STEP S7. When [counter] ≧ K is not the case in STEP S7, return to STEP S9. Thus operations of the motion compensation are repeated K times. Namely, operations of motion compensation to the macro block of K pieces are combined to be implemented. When [counter] ≧ K in STEP S7, it is judged whether or not it is the last macro block of 1 (one) frame (STEP S12). When it is not the last macro block of 1 (one) frame in STEP S12, return to STEP S12. When it is the last macro block of 1 (one) frame in STEP S12, return to STEP S1 after termination of the frame decode.

The motion compensation (STEP S9) is the processing for restoration of the image in such a way that a part of the image is extracted from the frame decompressed previously thus restoring the image using time redundancy of the moving pictures. The position of the image is determined, which is extracted in accordance with a parameter called a motion vector. The image which is extracted is a domain of a square called a the macro block 16 by 16 pixels. The decompression of the macro block is completed such that the domain extracted is added to the result of the inverse DCT stored in the DCT coefficient buffer. The macro block being decompressed is stored in the internal memory device.

In the moving pictures decompression device of the present invention, the variable length code decoding is combined to be implemented, the inverse quantization, and the inverse DCT toward a plurality of the macro blocks, therefore, it becomes possible to utilize the variable length code table effectively stored in the cache memory device 5. As a result, the occurrence of cache miss can be reduced in the variable length code decoding processing.

Furthermore, in the moving pictures decompression device of the present invention, the motion compensation toward a plurality of the macro block is combined to be implemented. Therefore, it becomes possible to utilize the data of the reference frame stored in the cache memory device 5. As a result, the occurrence of the cache miss may be reduced in the motion compensation processing. This is based on the fact that in the motion compensation processing of adjacent macro blocks, the position of the reference frame to be accessed is close in most cases, and scores of bytes of surrounding areas are stored in the cache memory device 5 while accessing a certain address.

The moving pictures decompression device of the present invention is capable of preventing a lowering of processing speed of the decode software by reducing the cache miss in the variable length code decoding processing and the motion compensation processing.

While preferred embodiments of the invention have been described using specific terms, such description is for illustrative purpose only, and it is to be understood that changes and variations may be made without departing from the spirit or scope of the following claims.

## Claims

1. A moving pictures decompression device in which a CPU, a memory device, a display device and a decode software are provided, which operates on said CPU, having means for combining to be implemented a variable length code decoding, an inverse quantization, and an inverse DCT (Discrete Cosine Transformation) regarding a plurality of macro blocks.

2. A moving pictures decompression device in which a CPU, a memory device, a display device and a decode software are provided, which operates on said CPU, having means for combining to be implemented a motion compensation processing regarding a plurality of macro blocks.

3. A moving pictures decompression device in which a CPU, a memory device, a display device and a decode software are provided, which operates on said CPU, having means for combining to be implemented a variable length code decoding, an inverse quantization, and an inverse DCT (Discrete Cosine Transformation) regarding a plurality of macro blocks, and means for combining to be implemented a motion compensation processing regarding a plurality of macro blocks.

4. A moving pictures decompression method in which a CPU, a memory device, a display device and a decode software are provided, which operates on said CPU, comprising the step of:
combining to be implemented a variable length code decoding, an inverse quantization, and an inverse DCT (Discrete Cosine Transformation) regarding a plurality of macro blocks.

5. A moving pictures decompression method in which a CPU, a memory device, a display device and a decode software are provided, which operates on said CPU, comprising the step of:
combining to be implemented a motion compensation processing regarding a plurality of macro blocks.

6. A moving pictures decompression method in which a CPU, a memory device, a display device and a decode software are provided, which operates on said CPU, comprising the steps of:
combining to be implemented a variable length code decoding, an inverse quantization, and an inverse DCT (Discrete Cosine Transformation) regarding a plurality of macro blocks; and
combining to be implemented a motion compensation processing regarding a plurality of macro blocks.
